# EUROPEAN PATENT APPLICATION

(11) **EP 0 940 277 A1**
(43) Date of publication of application: **08.09.1999**
(21) Application number: 99301628.6
(22) Date of filing: 04.03.1999
(51) Int. Cl.: B60J 5/06, D03D 15/02, B32B 7/12

(54) **Reinforced closures for goods containers**

(30) Priority: 05.03.1998 GB 9804548
(71) Applicant: Southfields Coachworks Ltd., Loughborough, Leicestershire LE11 0QY (GB)
(72) Inventor: Malpas, Jeremy Charles, Loughborough, Leicestershire LE11 2LA (GB)
(74) Representative: Parr, Ronald Edward

(57) **Abstract**

A composite material suitable for use as, or as part of, a closure for a vehicle body or other goods container, comprises a sheet of a metal-reinforced textile fabric, at least one face of the sheet having a flexible, weather-resistant covering. The metal reinforcement, which can be in the form of wire or filaments, can be present in the warp or weft (or both) of the textile fabric. The weather-resistant covering can be a thermoplastic polymer (for example PVC) or other plastics material.

The invention also includes a curtain for a curtain-sided vehicle body or other goods container, which comprises a sheet of the composite material; means to suspend the curtain from an upper portion of the container; and means to secure the curtain in place with respect to the container.

## Description

This invention relates to composite material suitable for use as, or as part of, closure means for vehicle bodies or other goods containers. In particular, it relates to a slash-resistant composite material suitable for use as, or as part of, the curtain of curtain-sided goods containers, that is, goods containers having in one or more sides thereof a loading (or unloading) aperture which is closable by a sliding curtain.

Curtain-sided vehicles have become firmly established in the road transport industry owing to the ease with which, when the curtains are retracted, they can be loaded and unloaded by means of fork-lift trucks. The curtains are normally sheets of PVC suspended at their upper edge portion by runners or sliders moving along a track disposed longitudinally of the vehicle body, and tension in the vertical dimension of the curtain is provided by the use of strap and buckle devices by means of which vertical reinforcements of the curtain, usually strips of webbing material, are secured to the respective side rave of the vehicle body.

Although curtain-sided vehicles enjoy considerable commercial success, they suffer from a disadvantage in that the conventional flexible PVC curtains do not offer very much resistance to the action of thieves in slashing the curtains with knives or similar instruments and thereby gaining access to the interior of the vehicle body and its contents.

The present invention now provides a composite material suitable for use as, or as part of, closure members for vehicle bodies and other goods containers, which is highly resistant to slash attack.

In a first aspect the present invention provides a composite material suitable for use as, or as part of, a closure for a vehicle body or other goods container, comprising a sheet of a metal-reinforced textile fabric, at least one face of the sheet having a flexible, weather-resistant covering.

In a second aspect the present invention provides a curtain for a curtain-sided vehicle body or other goods container, which comprises a sheet of a composite material according to the first aspect of the invention; means to suspend the curtain from an upper portion of said container; and means to secure the curtain in place with respect to said container.

The metal reinforcement of the metal-reinforced textile fabric (referred to below also as the "textile fabric") can take various forms. Thus, where the textile fabric is a woven fabric, the metal reinforcement can, for example, be present in the form of strands, in the warp or weft or in both the warp and weft. Where the metal reinforcement runs in only one direction it is referred to herein as being "unidirectional". The metal can be present as continuous or discontinuous strands.

The metal reinforcement is conveniently of steel in order to provide sufficient strength though, if desired, other metals can be used. Where the metal is mild steel or other metal susceptible to corrosion, it preferably has a corrosion-resistant coating; suitable corrosion resistant materials are, for example, those known as being suitable for coating steel filaments in radial tyres, for instance zinc, copper or brass.

The metal reinforcement is conveniently in a filamentary form, preferably multi-filamentary. Thus, the metal reinforcement is conveniently in the form of two, three or more strands each comprising a plurality of filaments, for example, two, three or four.

The other, non-metallic, textile component or components can be any material suitable for being woven with, or otherwise incorporated with, the metallic component. The choice of such non-metallic component or components is dictated largely by the required strength of the resulting textile fabric and its required flexibility. Usually these two characteristics are contrary in that the stronger the material, that is, the more resistant it is to slashing, the less flexible it can be expected to be. The non-metallic component can be of any suitable textile which can be natural (for example cotton), synthetic (for example polyaramid) or man-made; the textile can, if desired, be in a coated form. The non-metallic component is conveniently in the form of filaments consisting of, or containing nylon, which can be in a coated or uncoated form.

As stated above, the metal reinforcement can be present in either or both of the warp and weft. Where, for example, the non-metallic component is nylon, it has been found convenient for the metal component to be in the weft and the nylon in the warp. In a preferred form of the invention the warp consists substantially entirely of nylon filaments and the weft substantially entirely of steel filaments, preferably having a corrosion-resistant coating.

With reference to the flexible, weather-resistant covering referred to above, it can be, for example, in the form of a laminate with the textile material. Whether or not a laminate, said covering can be, for example, a thermoplastic polymer or other plastics material, for example polyvinyl chloride (PVC). Whatever, coating material is used it should preferably provide the desirable characteristics of conventional PVC curtains used for curtain-sided vehicles, including flexibility and a weatherproof, or at least weather-resistant capability. The plastics material is preferably present on both faces of the textile fabric. A preferred form of coating material is a layer of PVC formed in situ on the metal-reinforced textile fabric by applying to one or both faces of that fabric a PVC plastisol. If desired, the plastisol can be applied to only one or both faces of the textile fabric. If the plastisol is applied by the method commonly adopted for production of conventional PVC curtains it is generally found that application of the plastisol to one face of the textile fabric results in it penetrating the fabric and thereby providing a coherent coating on both sides of the fabric. It is preferred that, whatever method is used to apply the PVC or other plastics material coating to the textile fabric, it should result in the plastics material becoming firmly bonded to the textile material, for example, by penetrating the interstices (or at least some of the interstices) between the filaments of the textile fabric.

Although the invention has been described above with reference to the plastics material being coated on the metal reinforced fabric by means of a plastisol method, other means can be used, for example using the plastics material in pre-formed sheet form and securing that sheet to the textile fabric by pressing, rolling or adhesive, or any combination thereof.

The warp and weft of the metal-reinforced textile fabric are conveniently arranged at a right angle to each other and, in use, the metal reinforcement can be disposed either vertically, horizontally or at some other angle with regard to the geometry of the curtain, though as goods container curtains normally require greater flexibility in a horizontal direction (to facilitate the folding of the curtain that occurs when the curtain is opened), it is preferable that the metal reinforcement be in the vertical direction (or at least in a substantially vertical direction), thereby to obviate or even avoid completely bending of the metal reinforcement.

The present invention includes alternatives in which the warp and/or weft are in a disposition other than horizontal and/or vertical with regard to the curtain. This form of the invention can enhance still further the slash resistance of the curtain of the invention.

In a further form of the invention the composite material contains two or more sheets of the textile fabric. This form can comprise, for example, an assembly of two sheets of the textile fabric in face-to-face relationship, the outer faces (or outermost faces where there are more than two sheets of the textile fabric) having a coating of flexible plastics material. An alternative structure comprises an assembly of two sheets of composite material according to the first aspect of the present invention, each sheet comprising a sheet of the textile fabric having on both faces thereof a coating of flexible plastics material and the two sheets of composite material being secured together at the interface between adjacent surfaces of plastics material. The number of metal-reinforced textile fabric sheets that can be used will depend on their flexibility and on the flexibility required in the closure; the greater the flexibility of the metal-reinforced fabric the greater the number of such sheets can be used.

Not all of the composite material embodiments referred to in the preceding paragraph are flexible enough for satisfactory use in a curtain-sided goods container. However, these more rigid embodiments are suited for use as structural panels for more rigid goods containers, for example motor vans.

In those embodiments of the composite material of the invention which contain more than one sheet of the textile fabric, it is preferred that the direction of the metal reinforcement be not identical in the two or several sheets. As stated above, it is usually not practicable to use the composite material in a disposition in which the metal reinforcement runs horizontal or substantially horizontal with respect to the curtain. Therefore, where two or more sheets of the textile material are used they should preferably be so arranged that the directions of the metal reinforcement in adjacent sheets are off set from each other by a small angle, for example an angle in the range 5° to 20°, for instance 10°.

With regard to the curtains that constitute the second aspect of the present invention, a sheet or sheets of composite material according to the first aspect of the invention can be used either for the whole area of the curtain or only for part of it. A disadvantage of using the composite material for the whole area is that it is then normally necessary to form holes in the composite material so as to pass bolts securing the curtain at its upper edge portion to supporting runners or sliders and, at its lower edge portion, to securement buckles; and formation of the necessary holes through the metal reinforced textile fabric can be inconvenient. Therefore, in an alternative form of curtain of the present invention the composite material does not extend as far as the upper edge portion of the curtain, the upper edge portion being provided, for example, by a sheet of conventional curtain material secured to the upper edge of the composite material. In practice, this latter arrangement does not detract substantially from the security provided by the curtain, because most attempts to slash conventional curtains are made against the lower portion of the curtain.

### EXAMPLE

There is now described, by way of example, a slash-resistant composite material according to the present invention and suitable for use in a curtain of a curtain-sided vehicle body.

The composite material comprises a sheet of a steel-reinforced textile fabric having on both faces a pvc coating, the sheet of steel-reinforced textile fabric having a thickness of 1.5mm. The warp of the steel-reinforced textile fabric is of non-coated nylon yarn having a pitch of 2.5mm. The weft is of steel cable comprising three strands each of three filaments, the filaments having a diameter of 0.18mm and having a zinc coating.

In the following Table the data given relates to a textile fabric whose metal reinforcement is a plurality of steel filaments in the form of three strands, each comprising three filaments. The cable metal reinforcement is coated with zinc as a corrosion-resistant layer. The warp consists of non-dipped nylon yarn (940/2x2) which is woven with the steel cables in a square weaving pattern. However, if desired, other weaving patterns can be used.

The following Table shows, by way of example, characteristics of the textile fabric and its warp and its weft. Preferred values for the various characteristics are shown under the heading "range" and specific examples are shown under the heading "example".

**TABLE**

| | Example | Range |
|---|---|---|
| WARP: non-dipped nylon | | |
| yarn 940/2x2 | | |
| linear density g/m | 0.38 | 0.36 to 0.40 |
| breaking force N | 308 | 303 to 312 |

| WEFT: 3x3x0.18VZ | | |
|---|---|---|
| pics per m | 455 | 450 to 460 |
| cord diameter mm | 0.73 | 0.63 to 0.83 |
| linear density g/m | 1.80 | 1.70 to 1.90 |
| breaking force N | 539 | 524 to 548 |
| mass of zinc g/kg | 72.5 | 68.9 to 75.4 |

| Composite Material | | |
|---|---|---|
| width on roll (mm) 1,000 | thickness | (mm) 1.50 |
| number of cords | 398 | warp strength N/mm 123 |
| weft strength N/mm | 245 | |

The metal strands of the weft are uni-directional and the weft and warp are disposed at substantially a right angle to each other.

The PVC coating on the steel-reinforced textile fabric - in the present instance a coating on both faces of the fabric - had been applied in the form of three successive applications of a plastisol, and penetrates the interstices of the steel-reinforced textile fabric thereby to form a firmly bonded composite material.

## Claims

1. A composite material suitable for use as, or as part of, a closure for a vehicle body or other goods container, comprising a sheet of a metal-reinforced textile fabric, at least one face of the sheet having a flexible, weather-resistant covering.

2. A composite material according to Claim 1, in which the textile fabric is a woven material.

3. A composite material according to Claim 2, in which the metal reinforcement of the metal-reinforced textile fabric is present in the warp or weft of said fabric.

4. A composite material according to Claim 2, in which the metal reinforcement of the metal-reinforced textile fabric is present in both the warp and weft of said fabric.

5. A composite material according to any of the preceding claims, in which the metal reinforcement is in a filamentary form.

6. A composite material according to any of the preceding claims, in which the flexible weather-resistant coating is on one side only of said sheet of metal-reinforced textile fabric.

7. A composite material according to any of the preceding claims, in which the weather-resistant covering is of a thermoplastic polymer or other plastics material.

8. A composite material according to any of the preceding claims, in which the textile material and the weather-resistant covering are in the form of a laminate.

9. A composite material according to any of the preceding claims, which contains two or more sheets of metal-reinforced textile material.

10. A composite material according to Claim 9, in which the direction of the metal reinforcement is not identical in said two or more sheets.

11. A composite material according to any of Claims 1 to 10, which is of sufficient flexibility to be used as a curtain.

12. A curtain for a curtain-sided vehicle body or other goods container, which comprises a sheet of a composite material as claimed in Claim 11; means to suspend the curtain from an upper portion of said container; and means to secure the curtain in place with respect to said container.

13. A curtain according to Claim 12, in which, in use, the flexibility of the curtain in the horizontal direction is greater than that in the vertical direction.

14. A curtain according to Claim 13, in which the difference of flexibility in the horizontal and vertical directions is effected by there being a preponderance of the metal reinforcement in the vertical direction.

15. A curtain according to Claim 12, 11 or 14, in which, in use, the metal reinforcement (or at least one of the metal reinforcements) is in a non-vertical disposition.
